(19) Europäisches Patentamt
European Patent Office
Office européen des brevets

(11) **EP 0 821 823 B1**

(12) **EUROPÄISCHE PATENTSCHRIFT**

(45) Veröffentlichungstag und Bekanntmachung des Hinweises auf die Patenterteilung:
**13.06.2001 Patentblatt 2001/24**

(21) Anmeldenummer: 97921650.4

(22) Anmeldetag: **19.02.1997**

(51) Int Cl.[7]: **G10K 11/172**, G01F 1/66

(86) Internationale Anmeldenummer:
**PCT/EP97/00795**

(87) Internationale Veröffentlichungsnummer:
**WO 97/31365 (28.08.1997 Gazette 1997/37)**

(54) **SCHALLDÄMPFER FUR ULTRASCHALLWELLEN**

SOUND DAMPER FOR ULTRASONIC WAVES

SILENCIEUX POUR ONDES ULTRASONORES

(84) Benannte Vertragsstaaten:
**CH DE DK FR GB LI NL**

(30) Priorität: **21.02.1996 DE 19606411**

(43) Veröffentlichungstag der Anmeldung:
**04.02.1998 Patentblatt 1998/06**

(73) Patentinhaber: **KROHNE MESSTECHNIK GMBH & CO. KG**
**D-47058 Duisburg (DE)**

(72) Erfinder:
• **VAN BEKKUM, Aart, Jan**
**NL-4223 MG Hoornaar (NL)**
• **ROOSNEK, Nico**
**NL-2592 AC Den Haag (NL)**

(74) Vertreter: **Gesthuysen, Hans Dieter, Dipl.-Ing.**
**Patentanwälte**
**Gesthuysen, von Rohr & Eggert**
**Postfach 10 13 54**
**45013 Essen (DE)**

(56) Entgegenhaltungen:
• **PATENT ABSTRACTS OF JAPAN vol. 008, no. 147 (P-285), 10.Juli 1984 & JP 59 046817 A (OVAL KIKI KOGYO KK), 16.März 1984,**
• **PATENT ABSTRACTS OF JAPAN vol. 011, no. 160 (M-592), 23.Mai 1987 & JP 61 294116 A (HONDA MOTOR CO LTD), 24.Dezember 1986,**
• **PATENT ABSTRACTS OF JAPAN vol. 008, no. 047 (M-280), 2.März 1984 & JP 58 202322 A (MAKOTO MINAMIDATE;OTHERS: 02), 25.November 1983,**

**Beschreibung**

Die Erfindung betrifft gemäß einer ersten Lehre einen Schalldämpfer für Ultraschallwellen in einem Gasstrom, mit mindestens einem in eine Leitung für den Gasstrom einsetzbaren Dämpfungselement. Ein solcher Schalldämpfer ist aus dem Abstract zur JP 59046817 bekannt.

Aus dem Stand der Technik sind bislang im wesentlichen Schalldämpfer für Schallwellen im akustischen Bereich (20 Hz - 20 kHz) bekannt. Diese werden beispielsweise in Abgasströmen von Kraftfahrzeugen eingesetzt um Emissionen von Schallwellen im akustischen Bereich möglichst zu reduzieren bzw. ganz zu vermeiden.

Im Bestreben Emissionen von Schallwellen im akustischen Bereich auch in industriellen Anlagen möglichst zu reduzieren, um hiermit Umweltschutzauflagen zu erfüllen, sind seit kürzerer Zeit Drosselventile zur Steuerung eines Gasstromes bekannt, die, anstatt durch den Drosselvorgang verursachte Schallwellen im umweltrelevanten akustischen Bereich zu emitieren, nunmehr Schallwellen im umwelttechnisch unkritischeren Ultraschallbereich (> 20 kHz) insbesondere zwischen 2 kHz und 63 kHz produzieren.

Derartige Emissionen von Ultraschallwellen durch moderne Drosselventile führt zwar einerseits zur Erfüllung von Umweltauflagen, andererseits jedoch zu Konflikten mit häufig in Regelkreisen zur Einstellung eines Gasdurchflusses eingesetzten Durchflußmeßgeräten, die nach dem Ultraschallprinzip arbeiten. Die von den modernen Drosselventilen erzeugten Ultraschallwellen führen bei den bekannten Durchflußmeßgeräten, die nach dem Ultraschallprinzip arbeiten, zu ganz erheblichen Funktionsstörungen bis hin zum völligen Ausfall.

Der Erfindung liegt somit die Aufgabe zugrunde, Schalldämpfer im Ultraschallbereich insbesondere in Verbindung mit Durchflußmeßgeräten, die nach dem Ultraschallprinzip arbeiten, zur Verfügung zu stellen.

Nach der ersten Lehre der Erfindung ist die zuvor aufgezeigte und dargelegte Aufgabe dadurch gelöst, daß in dem Dämpfungselement zumindest eine, eine Vielzahl von kleinflächigen Reflexionsflächen aufweisende Streueinheit angeordnet ist.

Durch die erfindungsgemäße Ausgestaltung ist gewährleistet, daß die Ultraschallwellen sehr häufig reflektiert werden, so daß eine große Wahrscheinlichkeit für destruktive Interferenzen - und damit Auslöschungen - der Ultraschallwellen auf den verlängerten akustischen Pfaden besteht, die zu einer guten Dämpfung der Amplitude der Ultraschallwellen führt.

Bewegen sich die Abmessungen der Reflexionsflächen ungefähr im Bereich der Wellenlänge der Ultraschallwellen, so ist weiter gewährleistet, daß die größtmögliche Anzahl von für die Ultraschallwellen wirksame Reflexionsflächen in einem vorgegebenen Volumen unterzubringen sind. Reflexionsflächen mit Abmessungen im Bereich unterhalb der Wellenlänge der Ultraschallwellen sind für die Ultraschallwellen nicht oder nur bedingt "sichtbar", während Reflexionsflächen im Bereich oberhalb der Wellenlänge der Ultraschallwellen zwar für die Ultraschallwellen "sichtbar" sind und somit zu einer Reflexion führen aber gleichzeitig unnötig viel Platz verbrauchen.

Die Wahrscheinlichkeit destruktiver Interferenzen in Verbindung mit möglichst langen akustischen Pfaden ist dann besonders hoch, wenn die Reflexionsflächen unregelmäßig ausgerichtet sind.

Eine weitere Verbesserung der Dämpfung des erfindungsgemäßen Schalldämpfers für Ultraschallwellen ist dadurch gewährleistet, daß die Reflexionsflächen der Streueinheiten zumindest teilweise gekrümmt sind. Eine derartige Krümmung der Reflexionsflächen führt zur Bildung von Wirbeln innerhalb des Gasstroms, die ebenfalls eine Dämpfung der Amplitude der Ultraschallwellen zur Folge haben.

Ist am und/oder im Dämpfungselement mindestens eine Lage Gaze oder ein vergleichbares textiles Material angeordnet, so ist durch die Vielzahl von Störungen des Gasstromes durch die Gaze eine weitere Reduzierung der Amplitude der Ultraschallwellen gewährleistet.

Eine besonders vorteilhafte Ausgestaltung erfährt der erfindungsgemäße Schalldämpfer für Ultraschallwellen dadurch, daß das Dämpfungselement, vergleichbar mit bekannten konventionellen Dämpfungselementen für Schallwellen im akustischen Bereich, aus einem gelochten, rohrförmigen, an einem Ende geschlossenen Körper besteht. Ein derartiges Dämpfungselement ist einfach und kostengünstig herzustellen und kann beispielsweise auch, wie erwähnt, aus Schalldämpfern für Schallwellen im akustischen Bereich übernommen werden.

Experimentell hat sich ein Durchmesser von ungefähr 20 mm für die Löcher in dem Dämpfungselement als besonders vorteilhaft für die Dämpfungseigenschaften des Schalldämpfers herausgestellt.

Bei dem beschriebenen, aus einem gelochten, rohrförmigen, an einem Ende geschlossenen Körper bestehenden Dämpfungselement hat sich eine die Anordnung mindestens einer von außen nach innen gerichtete, offene geometrische Strukturen aufweisenden Streueinheit an der Innenseite des Dämpfungselementes als besonders vorteilhaft herausgestellt. Die offenen geometrischen Strukturen können ganz unterschiedliche Querschnitte aufweisen. Sie können beispielsweise kreisförmig, quadratisch od. dgl. ausgebildet sein.

Eine weitere vorteilhafte Ausgestaltung erfährt der erfindungsgemäße Schalldämpfer dadurch, daß das Dämpfungselement mit einer Vielzahl von Streueinheiten gefüllt ist. Durch diese Maßnahme ist gewährleistet, daß die Reflexionsflächen in hohem Maße unregelmäßig ausgerichtet sind und die Streueinheiten gleichzeitig keine übermäßig komplizierte Struktur aufweisen müssen.

Für den Fall einer Füllung des Dämpfungselementes mit einer Vielzahl von Streueinheiten sind sogenannte PALL-Ringe als Streueinheiten besonders vorteilhaft. Diese PALL-Ringe weisen zum einen eine Vielzahl von kleinen Reflexionsflächen auf, wobei diese Reflexionsflächen zum anderen derart angeordnet sind, daß mit hoher Wahrscheinlichkeit eine weitere Dämpfung der Amplitude der Ultraschallwellen bewirkende Wirbel erzeugt werden.

Vergleichbar mit Schalldämpfern für Schallwellen im akustischen Bereich ist es auch für den erfindungsgemäßen Schalldämpfer besonders vorteilhaft, das Dämpfungselement an eine gekrümmte Leitung angepaßt auszuführen. Die durch diese Krümmung weiter verlängerten akustischen Pfade führen zu einer zusätzlichen Dämpfung der Amplitude der Ultraschallwellen.

Gemäß einer zweiten Lehre betrifft die Erfindung ein Durchflußmeßgerät, das nach dem Ultraschallprinzip arbeitet. Ein solches Durchflußmeßgerät ist beispielsweise aus der DE - A - 195 30 807 bekannt.

Nach der zweiten Lehre der Erfindung ist ein bekanntes Durchflußmeßgerät, das nach dem Ultraschallprinzip arbeitet, dadurch gekennzeichnet, daß zwischen einer Ultraschallquelle und dem Durchflußmeßgerät ein Schalldämpfer für Ultraschallwellen, insbesondere wie vorstehend beschrieben, angeordnet ist. Durch diese Maßnahme ist vorteilhaft gewährleistet, daß das Durchflußmeßgerät, das nach dem Ultraschallprinzip arbeitet, nicht in seiner Funktion durch Ultraschallwellen aus fremden Quellen beeinflußbar ist.

Im einzelnen gibt es nun eine Vielzahl von Möglichkeiten, den erfindungsgemäßen Schalldämpfer für Ultraschallwellen in einem Gasstrom auszugestalten und weiterzubilden. Dazu wird einerseits auf die dem Patentanspruch 1 nachgeordneten Patentansprüche 2 bis 11, andererseits auf die Beschreibung von bevorzugten Ausführungsbeispielen in Verbindung mit der Zeichnung. In der Zeichnung zeigt

Fig. 1      eine Prinzipskizze eines Durchflußmeßgerätes, das nach dem Ultraschallprinzip arbeitet,

Fig. 2      ein Ausführungsbeispiel eines Dämpfungselementes gemäß der ersten Lehre der Erfindung,

Fig. 3a), b)      ein erstes und ein zweites Ausführungsbeispiel einer erfindungsgemäßen Streueinheit im Schnitt,

Fig. 4a), b)      ein drittes Ausführungsbeispiel einer erfindungsgemäßen Streueinheit in zwei verschiedenen Ansichten,

Fig. 5      das Ausgangssignal eines Durchflußmeßgerätes, das nach dem Ultraschallprinzip arbeitet, ohne daß ein Schalldämpfer nach der ersten Lehre der Erfindung zwischen einer Ultraschallquelle und dem Durchflußmeßgerät angeordnet ist und

Fig. 6      das Ausgangssignal eines Durchflußmeßgerätes, das nach dem Ultraschallprinzip arbeitet, bei dem ein Schalldämpfer nach der ersten Lehre der Erfindung zwischen einer Ultraschallquelle und dem Durchflußmeßgerät angeordnet ist.

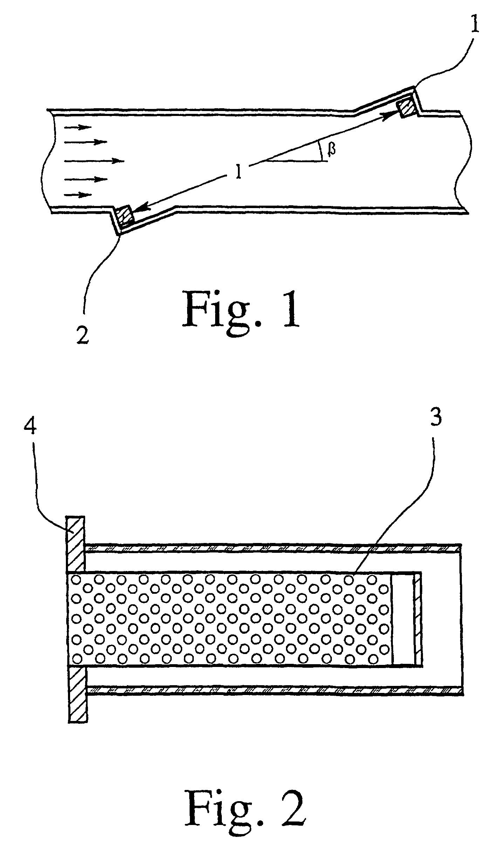

In Fig. 1 der Zeichnung ist ein nach dem Ultraschallprinzip arbeitendes Durchflußmeßgerät mit zwei Ultraschalltransducern 1, 2 dargestellt, von denen jeweils einer Ultraschallwellen aussendet, die von dem anderen empfangen werden. Dies geschieht wechselweise, d. h. jeder der Ultraschalltransducer 1, 2 dient abwechselnd als Sender und Empfänger. Die Geschwindigkeit des Gasstroms ergibt sich bei einem solchen System nach der Formel

$$v = \frac{l}{2 \cdot \cos\beta}\left(\frac{1}{t_{up}} - \frac{1}{t_{down}}\right)$$

mit

$l$ = Abstand zwischen den beiden Ultraschalltransducern 1, 2,

$\beta$ = dem Winkel der Ausbreitung des Ultraschall-Pulses relativ zur Richtung des Gasstroms,

$t_{up}$ = der Ausbreitungszeit stromaufwärts und

$t_{down}$ = der Ausbreitungszeit stromabwärts.

Diese Zusammenhänge vorausgesetzt ergibt sich für den Fehler in dem Meßsignal für die Durchflußgeschwindigkeit folgender Zusammenhang:

$$\delta v = \frac{1}{2 \cdot \cos\beta} \; \frac{1}{\sqrt{2\pi} f} \; \frac{1}{\sqrt{S/_N}}$$

mit

$f$ = Frequenz des Ultraschallsignals der Ultraschalltransducer 1, 2 und

$S/_N$ = Signal/Rausch-Verhältnis der Meßsignale.

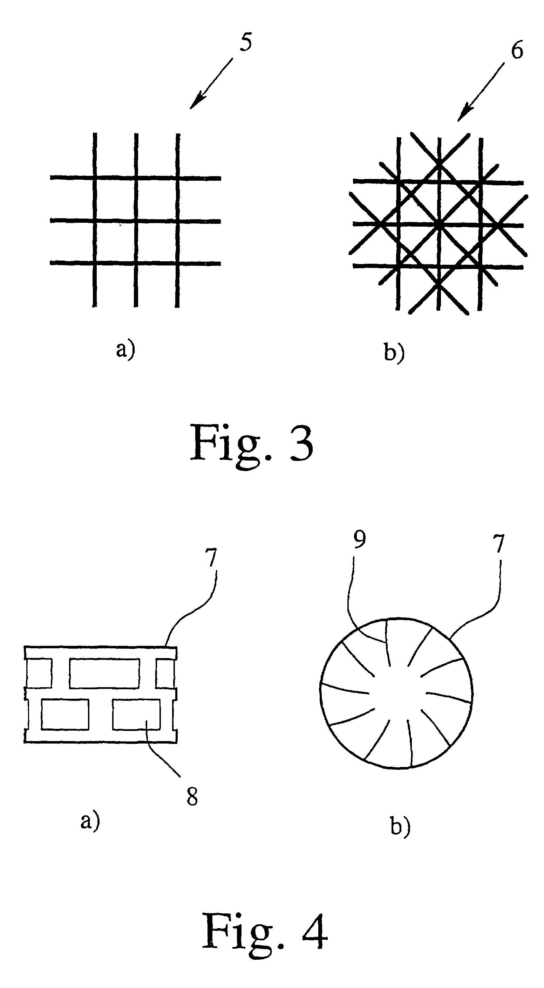

Um gemäß der ersten Lehre der Erfindung die Amplitude der Ultraschallwellen in einem Gasstrom zu reduzieren und damit eine Verbesserung des Signal/Rausch-Verhältnisses zu erlangen, ist ein Dämpfungselement beispielsweise als gelochter, rohrförmiger, an einem Ende geschlossener Körper ausgebildet. Ein solches Dämpfungselement 3 ist in Fig. 2 dargestellt. Dieses in Fig. 2 dargestellte Dämpfungselement 3 wird mit seinem Anschlußflansch 4 zwischen zwei Verbindungsflanschen einer nicht dargestellten Rohrleitung eingespannt.

An der Innenseite des Dämpfungselementes 3 ist z. B. ein in Fig. 3a) dargestelltes erstes Ausführungsbeispiel einer von außen nach innen gerichtete, offene geometrische Strukturen aufweisende Streueinheit 5 angeordnet. Diese Streueinheit 5 ist in Fig. 3a) anhand eines Ausschnittes im Schnitt dargestellt. Im Idealfall liegt die Tiefe der Streueinheit 5 in Strömungsrichtung im Bereich der Wellenlänge der Ultraschallwellen. Eine alternative zweite Streueinheit 6 ist in Fig. 3b) ebenfalls im Schnitt dargestellt. Diese Streueinheiten 5, 6 können einerseits als insgesamt zylindrisch ausgebildete Streueinheit an der Innenseite des Dämpfungselementes 3 angeordnet sein, andererseits als eine Vielzahl von kleinen Streueinheiten mit gleichen oder ähnlichen Querschnitten das Dämpfungselement 3 unregelmäßig ausfüllen. Beide Möglichkeiten können auch kumulativ eingesetzt werden. Wesentlich ist hierbei stets, daß in dem Dämpfungselement 3 durch die in ihm angeordneten Streueinheiten 5, 6 eine möglichst hohe Vielzahl von kleinflächigen Reflexionsflächen vorhanden ist.

Als besonders geeignete Streueinheiten zur unregelmäßigen Ausfüllung des Dämpfungselementes 3 haben sich sogenannte, in Fig. 4 dargestellte PALL-Ringe 7 herausgestellt. Diese PALL-Ringe 7 sind im wesentlichen zylinderförmig und weisen in dem Zylindermantel vorzugsweise rechteckige Öffnungen 8 auf. Diese sind in Fig. 4a) besonders gut zu erkennen. Außerdem weisen die PALL-Ringe 7 an ihrer Innenseite schaufelförmig gekrümmte Leitelemente 9 auf, die zu den erwünschten, die Amplitude der Ultraschallwellen dämpfenden Verwirbelungen des Gasstromes führen. Diese Leitelemente 9 sind in Fig. 4b) gut zu erkennen.

Ein weiterer, bislang nicht erwähnter Vorteil eines Schalldämpfers nach der ersten Lehre der Erfindung besteht darin, daß die verbleibenden Ultraschallwellen am Ausgang des Schalldämpfers sehr stark gestreut austreten, sich also in alle Richtungen ausbreiten. Somit kann eine weitere Reduzierung des Einflusses der Ultraschallwellen auf z.B. ein Durchflußmeßgerät durch einen vergrößerten Abstand zwischen Schalldämpfer und Durchflußmesser oder durch Ultraschalltransducer mit stark richtungsabhängiger Empfangscharakteristik erzielt werden.

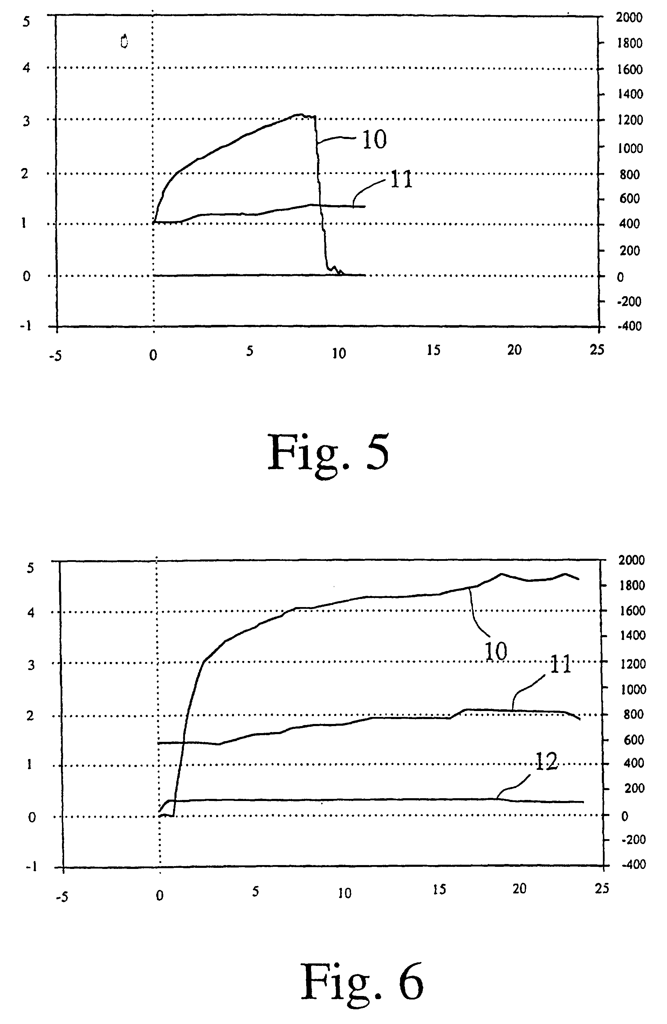

In Fig. 5 der Zeichnung ist ein Meßsignal 10 eines Durchflußmeßgerätes, das nach dem Ultraschallprinzip arbeitet, für den rechts aufgetragenen Volumendurchfluß in m³/h in Abhängigkeit von der Zeit dargestellt. In Fig. 5 ist weiter die Öffnung 11 eines Drosselventils in Abhängigkeit von der Zeit dargestellt. Man erkennt deutlich, daß das Meßsignal 10 oberhalb eines kritischen Wertes trotz weiter geöffnetem Drosselventil aufgrund des zu stark angestiegenen Signal/Rausch-Verhältnisses zusammenbricht. Dies ist selbstverständlich unerwünscht.

In Fig. 6 der Zeichnung ist schließlich ein Meßsignal 10 eines Durchflußmeßgerätes, das nach dem Ultraschallprinzip arbeitet, für den Volumendurchfluß dargestellt, bei welchem im Gasstrom zwischen dem Drosselventil als Ultraschallquelle und dem Durchflußmeßgerät ein erfindungsgemäßer Schalldämpfer für Ultraschallwellen angeordnet ist. Man erkennt deutlich, daß das Durchflußmeßgerät bis hin zu hohen Volumendurchflüssen ein einwandfreies Meßsignal 10 liefert. In Fig. 6 der Zeichnung ist weiter der links aufgetragene Druckabfall 12 über dem erfindungsgemäßen Schalldämpfer für Ultraschallwellen erkennbar. Dieser Druckabfall 12 beträgt bei einem Volumendurchfluß von ca. 2000 m³/h ungefähr 0,5 bar.

**Patentansprüche**

1. Schalldämpfer für Ultraschallwellen in einem Gasstrom, mit mindestens einem in eine Leitung für den Gasstrom einsetzbaren Dämpfungselement (3), dadurch gekennzeichnet, daß in dem Dämpfungselement (3) zumindest eine, eine Vielzahl von kleinflächigen Reflexionsflächen aufweisende Streueinheit (5, 6, 7) angeordnet ist.

2. Schalldämpfer nach Anspruch 1, dadurch gekennzeichnet, daß sich die Abmessungen der Reflexionsflächen ungefähr im Bereich der Wellenlänge der Ultraschallwellen bewegen.

3. Schalldämpfer nach Anspruch 1 oder 2, dadurch gekennzeichnet, daß die Reflexionsflächen unregelmäßig ausgerichtet sind.

4. Schalldämpfer nach einem der Ansprüche 1 bis 3, dadurch gekennzeichnet, daß die Reflexionsflächen der Streueinheiten (7) zumindest teilweise gekrümmt sind.

5. Schalldämpfer nach einem der Ansprüche 1 bis 4, dadurch gekennzeichnet, daß am und/oder im Dämpfungselement (3) mindestens eine Lage Gaze angeordnet ist.

6. Schalldämpfer nach einem der Ansprüche 1 bis 5, dadurch gekennzeichnet, daß das Dämpfungselement (3) aus einem gelochten, rohrförmigen, an einem Ende geschlossenen Körper besteht.

7. Schalldämpfer nach Anspruch 6, dadurch gekennzeichnet, daß die Löcher in dem Dämpfungselement (3) einen Durchmesser von ungefähr 20 mm aufweisen.

**8.** Schalldämpfer nach Anspruch 6 oder 7, dadurch gekennzeichnet, daß an der Innenseite des Dämpfungselementes (3) mindestens eine von außen nach innen gerichtete, offene geometrische Strukturen aufweisende Streueinheit (5, 6) angeordnet ist.

**9.** Schalldämpfer nach einem der Ansprüche 6 bis 8, dadurch gekennzeichnet, daß das Dämpfungselement (3) mit einer Vielzahl von Streueinheiten (5, 6, 7) gefüllt ist.

**10.** Schalldämpfer nach Anspruch 9, dadurch gekennzeichnet, daß die Streueinheiten (7) als PALL-Ringe ausgebildet sind.

**11.** Schalldämpfer nach einem der Ansprüche 1 bis 10, dadurch gekennzeichnet, daß das Dämpfungselement an eine gekrümmte Leitung angepaßt gekrümmt ausgeführt ist.

**12.** Durchflußmeßgerät, das nach dem Ultraschallprinzip arbeitet, dadurch gekennzeichnet, daß zwischen einer Ultraschallquelle und dem Durchflußmeßgerät ein Schalldämpfer für Ultraschallwellen nach einem der Ansprüche 1 bis 11 angeordnet ist.

**Claims**

**1.** A sound damper for ultrasonic waves in a gas flow, with at least one damping element that can be inserted into a line for the gas flow, **characterized in** that at least one scattering unit (5, 6, 7) having a plurality of small reflective surfaces is located in the damping element (3).

**2.** The sound damper according to claim 1, characterized in that the dimensions of the reflective surfaces vary approximately within the range of the wavelengths of the ultrasonic waves.

**3.** The sound damper according to claim 1 or 2, characterized in that the reflective surfaces are oriented irregularly.

**4.** The sound damper according to one of the claims 1 to 3, characterized in that the reflective surfaces of the scattering unit (7) are at least partially curved.

**5.** The sound damper according to one of the claims 1 to 4, characterized in that at least one layer of gauze is located on and/or in the damping element (3).

**6.** The sound damper according to one of the claims 1 to 5, characterized in that the damping element (3) is composed of a perforated, tubular body dosed at one end.

**7.** The sound damper according to claim 6, characterized in that the holes in the damping element (3) have a diameter of approximately 20 mm.

**8.** The sound damper according to claim 6 or 7, characterized in that a scattering unit (5, 6) having at least one open geometric structure pointing from the outside inward is located on the inside of the damping element.

**9.** The sound damper according to one of the claims 6 to 8, characterized in that the damping element (3) is filled with a number of scattering units (5, 6, 7).

**10.** The sound damper according to claim 9, characterized in that the scattering units (7) are designed as PALL rings.

**11.** The sound damper according to one of the claims 1 to 10, characterized in that the damping element is designed to be curved and adapted to a curved line.

**12.** A flow meter that works on the ultrasonic principle, characterized in that a sound damper for ultrasonic waves, according to one of the claims 1 to 11, is located between an ultrasound source and the flow meter.

**Revendications**

**1.** Atténuateur sonore pour ondes ultrasoniques dans un courant gazeux, ayant au moins un élément atténuateur (3) pouvant être mis en oeuvre dans une conduite pour le courant gazeux, caractérisé en ce qu'au moins une unité de diffusion (5, 6, 7) présentant une pluralité de surfaces de réflexion de faible superficie est disposée dans l'élément atténuateur (3).

**2.** Atténuateur sonore selon la revendication 1, caractérisé en ce que les dimensions des surfaces de réflexion évoluent de façon approximative dans la bande des longueurs d'ondes des ondes ultrasoniques.

**3.** Atténuateur sonore selon la revendication 1 ou 2, caractérisé en ce que les surfaces de réflexion sont orientées de façon irrégulière.

**4.** Atténuateur sonore selon l'une des revendications 1 à 3, caractérisé en ce que les surfaces de réflexion des unités de diffusion (7) sont au moins partiellement recourbées.

**5.** Atténuateur sonore selon l'une quelconque des revendications 1 à 4, caractérisé en ce qu'au moins une couche de gaze est disposée sur et/ou dans l'élément atténuateur (3).

**6.** Atténuateur sonore selon l'une quelconque des revendications 1 à 5, caractérisé en ce que l'élément atténuateur (3) est constitué d'un corps perforé, de forme tubulaire, fermé à une extrémité.

**7.** Atténuateur sonore selon la revendication 6, caractérisé en ce que les trous présentent un diamètre d'environ 20 mm dans l'élément atténuateur (3).

**8.** Atténuateur sonore selon la revendication 6 ou 7, caractérisé en ce qu'au moins une unité de diffusion (5, 6) présentant des structures géométriques ouvertes dirigées de l'extérieur vers l'intérieur, est disposée sur le côté intérieur de l'élément atténuateur (3).

**9.** Atténuateur sonore selon l'une quelconque des revendications 6 et 8, caractérisé en ce que l'élément atténuateur (3) est garni d'une pluralité d'unités de diffusion (5, 6, 7).

**10.** Atténuateur sonore selon la revendication 9, caractérisé en ce que les unités de diffusion (7) sont formées en tant qu'anneaux PALL.

**11.** Atténuateur sonore selon l'une quelconque des revendications 1 à 10, caractérisé en ce que l'élément atténuateur est réalisé de façon recourbée adaptée à une conduite recourbée.

**12.** Débitmètre, qui fonctionne selon le principe des ultrasons, caractérisé en ce que, un atténuateur sonore pour ondes ultrasoniques selon l'une quelconques des revendications 1 à 11 est disposé entre une source d'ultrasons et le débitmètre.

Fig. 1

Fig. 2

a)                              b)

# Fig. 3

a)                              b)

# Fig. 4

Fig. 5

Fig. 6